# EUROPÄISCHE PATENTANMELDUNG

(11) **EP 1 003 061 A1**
(43) Veröffentlichungstag der Anmeldung: **24.05.2000**
(21) Anmeldenummer: 99122465.0
(22) Anmeldetag: 11.11.1999
(51) Int. Cl.: G02B 27/01

(54) **Für ein Kraftfahrzeug bestimmte Anzeigeeinheit**

(30) Priorität: 17.11.1998 DE 19852842
(71) Anmelder: Mannesmann VDO Aktiengesellschaft, 60388 Frankfurt am Main (DE)
(72) Erfinder: Hähl, Manfred, 63165 Mühlheim (DE); Hahlganss, Günther, 65830 Kriftel (DE)
(74) Vertreter: Klein, Thomas, Dipl.-Ing.

(57) **Zusammenfassung**

Bei einer Anzeigeeinheit (2), mit der eine farbige Abbildung in eine Frontscheibe (4) eines Kraftfahrzeuges eingespiegelt wird, bilden drei Lichtquellen (9,10,11) mit unterschiedlichem Farbspektrum jeweils einen zunächst unabhängigen Farbkanal. Hierzu strahlen die Lichtquellen (9,10,11) jeweils in ein auf das Farbspektrum abgestimmtes, monochromatisches LCD (12,13,14) ein. Anschließend werden die Farbkanäle mittels eines zwei farbselektive Spiegelflächen (15,16) aufweisenden optischen Elementes (8) überlagert. Dabei ermöglichen die monochromatischen LCDs (12,13,14) aufgrund ihrer hohen Transmission eine problemlos ablesbare Einspiegelung der Abbildung auch bei Verwendung von energiesparenden und damit weniger leistungsstarken Lichtquellen (9,10,11) und erlauben zugleich eine freie Programmierung der Oberfläche zur beliebigen Informationsdarstellung.

## Beschreibung

Die Erfindung betrifft eine zur Verwendung bei einem Kraftfahrzeug bestimmte Anzeigeeinheit, welche zur Darstellung eines farbigen, mittels einer Flüssigkristallanzeige (LCD) erzeugten, insbesondere an einer Frontscheibe des Kraftfahrzeuges reflektierten, Bildes ausgeführt ist.

Solche Anzeigeeinheiten werden eingesetzt, um dem Fahrer gewünschte graphische Informationen in seinen Sichtbereich der Frontscheibe einzublenden. Diese auch als Head-Up-Display bekannten Anzeigeeinheiten ermöglichen durch ihre günstige Positionierung der Einspiegelungsfläche eine einfache Ablesbarkeit von Informationen, welche beispielsweise die Geschwindigkeit, ein Navigationssystem oder aktuelle Verkehrshinweise betreffen. Der Fahrer muss hierzu nicht zunächst seinen Blick vom Verkehrsgeschehen abwenden, sondern kann zusätzlich zu der Darstellung in der Frontscheibe zugleich auch den Verkehr wahrnehmen.

Es sind bereits Anzeigeeinheiten bekannt, bei denen mittels eines Nachtsichtsystems die Umgebung erfasst und in eine Abbildungsfläche in der Frontscheibe eingespiegelt wird, so dass ein über das menschliche Sehvermögen hinausgehender Bereich der Straße für den Fahrer als Abbildung sichtbar ist.

Die Anzeigeeinheit muss dabei zugleich einerseits unter verschiedenen Betriebsbedingungen eine zuverlässige Ablesbarkeit gewährleisten, andererseits darf die hohe Transmission der Frontscheibe nicht eingeschränkt werden. Verbunden mit der geforderten hohen Transmission ist eine geringe Reflexion der Frontscheibe, so dass insbesondere auch durch eine möglicherweise große Helligkeit im Umgebungsbereich des Kraftfahrzeuges eine hohe Leuchtdichte der Abbildung notwendig wird.

Bisherige Anzeigeeinheiten ermöglichen eine entsprechende Darstellung, indem zur Bilddarstellung eine als segmentiertes Vakuumfluoreszenz-Display ausgeführte Anzeige verwendet wird. Solche Vakuumfluoreszenz-Displays verfügen in einem bestimmten Farbbereich über eine ausreichend hohe Leuchtdichte. Nachteilig wirkt sich hierbei aus, dass lediglich einfarbige Abbildungen mit ausreichender Leuchtdichte darstellbar sind. Weiterhin ermöglichen segmentierte Vakuumfluoreszenz-Displays bei der geforderten hohen Leuchtdichte keine frei programmierbare Oberfläche, so dass die Informationsdarstellung stark eingeschränkt ist.

Es sind weiterhin Anzeigeeinheiten bekannt, die eine beliebige farbige Abbildung mit Hilfe eines Farb-LCDs erreichen. Nachteilig wirkt sich hierbei aus, dass die geringe Transmission des Farb-LCDs nur eine eingeschränkte Ablesbarkeit der Abbildung ermöglicht. Daher konnten sich derart ausgeführte LCDs in der Praxis bisher nicht durchsetzen.

Es sind ferner bereits Projektionssysteme für große Abbildungsflächen bekannt, bei denen das von einer Lichtquelle mit hoher Lichtstärke ausgehende Licht zunächst mittels farbselektiver Spiegelflächen in verschiedene Farbkanäle aufgespaltet wird. Dadurch können monochromatische, d. h. einfarbige LCDs mit einer hohen Transmission verwendet werden. Die so erzeugten einzelnen Bilder werden anschließend zu einer gemeinsamen farbigen Abbildung zusammengesetzt. Die Anwendung solcher Projektionssysteme ist hingegen bei Kraftfahrzeugen aufgrund des aufwendigen Aufbaus und des damit verbundenen großen Platzbedarfs nicht möglich. Dabei liegt zugleich der Energiebedarf einer hierfür geeigneten Lichtquelle aufgrund der hohen Verluste durch die Aufspaltung in verschiedenen Farbkanäle erheblich über dem bei Kraftfahrzeugen realisierbaren Umfang. Ferner ist mit einer leistungsstarken Lichtquelle eine entsprechend starke Erwärmung verbunden, die im vorgesehenen Einbaubereich vor der Frontscheibe einen sinnvollen Einsatz ausschließt.

Der Erfindung liegt das Problem zugrunde, eine Anzeigeeinheit der eingangs genannten Art so zu gestalten, dass eine Abbildung beliebiger Farbgebung mit hoher Leuchtdichte erreicht werden kann. Hierbei soll zugleich eine frei programmierbare Darstellung ermöglicht werden.

Dieses Problem wird erfindungsgemäß dadurch gelöst, dass die Anzeigeeinheit mehrere Lichtquellen mit unterschiedlichem Farbspektrum, deren abgestrahltes Licht durch eine den Lichtquellen zugeordnete und als monochromatisches LCD ausgeführte Flüssigkristallanzeige fällt, und ein optisches Element zum Richten des Lichtes auf eine Projektions- oder Umlenkfläche aufweist. Hierdurch können die Lichtstrahlen der verschiedenfarbigen und jeweils einen Farbkanal bildenden Lichtquellen unabhängig voneinander durch das monochromatische LCD hindurchtreten. Dabei ermöglicht die im Vergleich zu einem Farb-LCD hohe Transmission eine hohe Leuchtdichte und dadurch eine problemlos ablesbare Projektion der Darstellung auf die Umlenkfläche in der Frontscheibe. Dabei lassen sich beliebige Farbgebungen realisieren, die hierbei insbesondere auch frei programmierbar und damit voll graphikfähig sind. Durch das unterschiedliche Farbspektrum der Lichtquellen entfällt die Aufspaltung der Lichtstrahlung in verschiedenen Farbkanäle. Dadurch können auch Lichtquellen geringerer Leistung mit entsprechend geringerer Stromaufnahme und Wärmestrahlung eingesetzt werden, welche somit auch eine Verwendung im Kraftfahrzeug ermöglichen.

Dabei ist eine besonders vorteilhafte Weiterbildung der Erfindung dadurch gegeben, dass die Lichtquellen einfarbiges Licht abstrahlen und ihnen jeweils ein monochromatisches LCD zugeordnet ist. Hierdurch lässt sich eine hohe Leuchtdichte der Anzeigeeinheit bei zugleich verbessertem Wirkungsgrad erreichen. Das monochromatische LCD kann dadurch der jeweiligen Lichtquelle optimal angepasst werden und ermöglicht so durch eine weiter erhöhte Transmission eine weiter verbesserte Darstellung und Ablesbarkeit.

Eine andere vorteilhafte Ausführungsform der Erfindung ist dadurch gegeben, dass das monochromatische LCD steuerbar ist und dass der Steuerung des LCDs entsprechend sequentiell das Licht der einzelnen Lichtquellen hindurchfällt. Hierbei können die einzelnen von den Lichtquellen ausgehenden Lichtstrahlen in schneller Folge nacheinander durch das hierzu steuerbare, monochromatische LCD hindurchfallen. Das optische Element ermöglicht hierbei einen gleichmäßig hellen und flächigen Farbeindruck.

Günstig ist es hierbei, wenn die Anzeigeeinheit jeweils eine rote, eine grüne und eine blaue Lichtquelle aufweist. Dadurch lassen sich Darstellungen beliebiger Farbgebung wiedergeben, wobei zugleich eine hohe Transmission des monochromatischen LCDs für die jeweilige Wellenlänge eine hohe Leuchtdichte sicherstellt.

Besonders vorteilhaft ist eine Weiterbildung der Erfindung auch dadurch ausgeführt, dass die Lichtquellen Leuchtdioden (LED) sind. Durch die Verwendung der Leuchtdioden (LED) als Lichtquelle wird eine energiesparende Ausführung der Anzeigeeinheit und zugleich auch eine geringe Wärmeabstrahlung erreicht, so dass eine wesentlich flexiblere Anordnung der Anzeigeeinheit im Bereich der Frontscheibe möglich ist. Dabei kann die LED gezielt das Farbspektrum einer gewünschten Wellenlänge abstrahlen. Weiterhin ermöglicht eine LED eine Helligkeitsregulierung, ohne dass hiermit zugleich eine Veränderung des Farbspektrums verbunden ist.

Ebenso lässt sich eine besonders günstige Ausführungsform dadurch erreichen, dass die Lichtquellen farbige Leuchtstofflampen sind. Hierbei ermöglicht der hohe Wirkungsgrad in Verbindung mit einer geringen Energieaufnahme einen problemlosen Einsatz im Fahrzeug. Eine Kühlung der Lichtquellen kann dabei in der Regel entfallen, so dass der Platzbedarf vergleichsweise gering ist.

Eine besonders vorteilhafte Ausführungsform der Erfindung ist dann gegeben, wenn das optische Element jeweils eine einer Lichtquelle zugeordnete, farbselektive Spiegelfläche hat, mittels derer die Strahlengänge der einzelnen Lichtquellen zu der gemeinsamen Projektions- oder Umlenkfläche zusammenführbar sind. Hierdurch wird es möglich, die mittels der einzelnen LCDs erzeugten und zunächst voneinander unabhängigen Farbkanäle auf einer gemeinsamen Fläche exakt zu einer farbigen Abbildung zu überlagern. Dabei werden die einzelnen Farbkanäle nacheinander mittels der farbselektiven Spiegelfläche eingespiegelt, die für die übrigen Farbkanäle uneingeschränkt durchlässig ist.

Das Einspiegeln der einzelnen Farbkanäle kann nacheinander erfolgen. Eine besonders vorteilhafte Weiterbildung der Erfindung, bei der das Einspiegeln im wesentlichen gemeinsam erfolgt, wird hingegen dadurch erreicht, dass das optische Element ein verschiedene farbselektive Spiegelflächen aufweisender Dichroit-Körper ist. Dadurch lässt sich eine platzsparende Ausführung erreichen, bei der die Lichtquellen durch das jeweilige monochromatische LCD in verschiedene Seiten des Dichroit-Körpers einstrahlen. Die einander überlagerten Farbkanäle treten an einer weiteren Seite des Dichroit-Körpers gemeinsam aus und sind für einen Betrachter als farbige Darstellung zu erkennen.

Neben der Verwendung der Anzeigeeinheit zum Einspiegeln der Darstellung in die Umlenkfläche in der Frontscheibe des Kraftfahrzeuges sind auch Anwendungen möglich, bei denen die Abbildung in ein Helm-Visier eines Motorradfahrers oder eines Flugzeugpiloten eingespiegelt wird. Ferner sind auch Anwendungen bei optischen Instrumenten, beispielsweise Projektoren, etc. denkbar.

Die Erfindung lässt verschiedene Ausführungsformen zu. Zur weiteren Verdeutlichung ihres Grundprinzips sind verschiedene davon in der Zeichnung dargestellt und werden nachfolgend beschrieben. Diese zeigt jeweils in einer seitlichen Prinzipdarstellung in
- Fig. 1: eine seitliche, teilweise geschnittene Darstellung eines Kraftfahrzeuges mit einer darin eingesetzten, erfindungsgemäßen Anzeigeeinheit,
- Fig. 2: die Anzeigeeinheit mit drei Lichtquellen und zwei farbselektiven Spiegelflächen,
- Fig. 3: eine Weiterbildung einer Anzeigeeinheit mit drei Lichtquellen und einem Dichroit-Körper,
- Fig. 4: eine weitere Ausführungsform einer Anzeigeeinheit mit drei Lichtquellen und einem steuerbaren LCD.

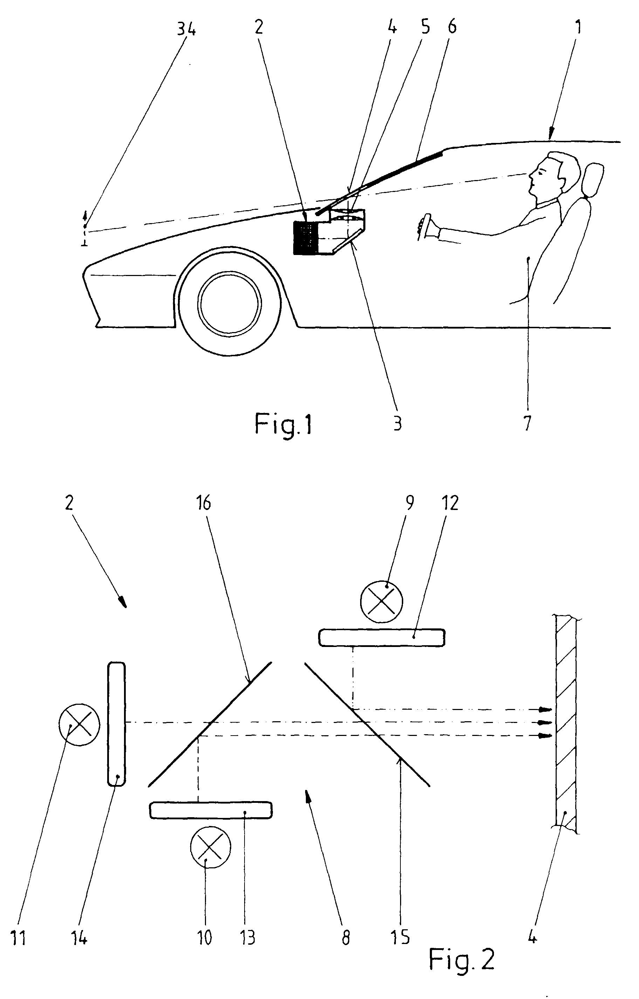

Figur 1 zeigt in einer Prinzipdarstellung eine teilweise geschnittene Seitenansicht einer in ein Kraftfahrzeug 1 eingesetzten Anzeigeeinheit 2. Mittels einer Spiegelfläche 3 wird von der Anzeigeeinheit 2 eine Abbildung mittels einer Linse 5 auf eine Umlenkfläche 4 einer Frontscheibe 6 des Kraftfahrzeuges 1 im Blickfeld eines Fahrers 7 projiziert, so dass dieser ein virtuelles Bild 34 erkennt. Der Fahrer 7 des Kraftfahrzeuges 1 kann daher die mittels der Anzeigeeinheit 2 und der Umlenkfläche 4 dargestellten Informationen ablesen, ohne hierzu seinen Blick vom Verkehrsgeschehen abwenden zu müssen. Ein solches Anzeigesystem wird allgemein als Head-Up Display bezeichnet.

Figur 2 zeigt den prinzipiellen Aufbau der erfindungsgemäßen Anzeigeeinheit 2 in einer Seitenansicht. Die Anzeigeeinheit 2 weist hierbei ein optisches Element 8 auf, in welches das von drei Lichtquellen 9, 10, 11 jeweils unterschiedlicher Farbe - üblicherweise RGB - abgestrahlte und durch jeweils ein auf das Farbspektrum der zugeordneten Lichtquelle 9, 10, 11 abgestimmtes, monochromatisches LCD 12, 13, 14 hindurchtretende Licht einstrahlt. Mittels des optischen Elementes 8, welches zwei, jeweils auf das Farbspektrum einer der Lichtquellen 9, 10 abgestimmte farbselektive Spiegelflächen 15, 16 aufweist, wird das mittels des jeweiligen monochromatischen LCD 12, 13 erzeugte Bild in den Strahlengang des von der Lichtquelle 11 ausgehenden und die beiden farbselektiven Spiegelflächen 15, 16 ungehindert passierenden Farbkanals eingespiegelt. Dabei entsteht ein überlagertes Bild der einzelnen Farbkanäle, welches so für einen nicht dargestellten Betrachter als farbige Abbildung sichtbar ist. Zur besseren Übersicht sind die einzelnen, in der Praxis nach dem Einspiegeln deckungsgleichen Farbkanäle parallel dargestellt (gestrichelter, strichpunktierter und strichdoppelpunktierter Strahlverlauf). Auf einer Projektionsfläche 4 ist ein farbiges und - im Gegensatz zu Figur 1 - reelles Bild sichtbar.

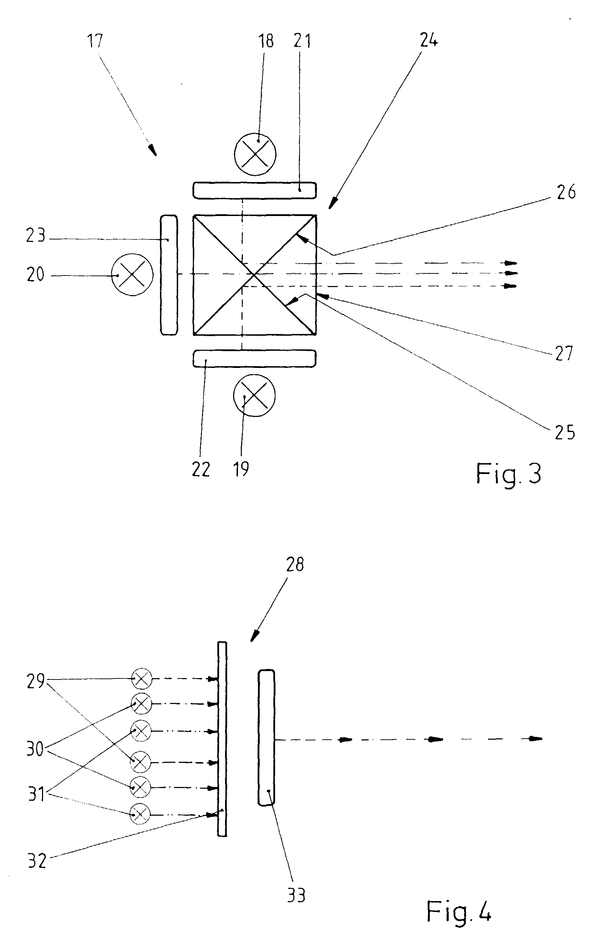

Eine demgegenüber abgewandelte und besonders kompakte Ausführungsform einer Anzeigeeinheit 17, die anstelle der Anzeigeeinheit 2 in Figur 1 eingesetzt wird, zeigt Figur 3. Die Anzeigeeinheit 17 weist drei unterschiedliche Lichtquellen 18, 19, 20 auf, denen jeweils ein monochromatisches LCD 21, 22, 23 zugeordnet ist. Eine der Lichtquellen 18 strahlt dabei rotes, eine weitere Lichtquelle 19 blaues und die dritte Lichtquelle 20 grünes Licht ab. Das durch die monochromatischen LCDs 21, 22, 23 hindurchtretende Licht strahlt an jeweils einer Seite eines als Dichroit-Körper ausgeführten, optischen Elementes 24 ein. Der Dichroit-Körper hat zwei diagonal und zueinander rechtwinklig verlaufende farbselektive Spiegelflächen 25, 26, die jeweils das Licht eines bestimmten Farbspektrums reflektieren, hingegen für das übrige Farbspektrum durchlässig sind. Daher wird das von der ersten Lichtquelle 18 ausgehende Licht an der Spiegelfläche 25 und das Licht der zweiten Lichtquelle 19 an der Spiegelfläche 26 reflektiert. Die einzelnen Farbkanäle treten anschließend an einer Fläche 27 des optischen Elementes 24 gemeinsam und einander überlagert aus. Zur besseren Übersichtlichkeit sind die einzelnen Farbkanäle parallel zueinander dargestellt, während in der Praxis die Position und Orientierung der Farbkanäle identisch ist, so dass eine deckungsgleiche Abbildung erreicht wird.

Figur 4 zeigt eine demgegenüber weiter vereinfachte Ausführungsform einer die Anzeigeeinheit 2 in Figur 1 ersetzenden Anzeigeeinheit 28 für ein Head-Up Display. Hierbei fällt das von einer Mehrzahl unterschiedlicher Lichtquellen 29, 30, 31 abgestrahlte Licht, wobei die Lichtquellen 29, 30, 31 jeweils rotes, grünes oder blaues Licht abstrahlen, zunächst durch ein optisches Element 32, welches mögliche Helligkeitsunterschiede aufgrund der räumlichen Anordnung der Lichtquellen 29, 30, 31 ausgleicht. Anschließend tritt das Licht durch ein steuerbares Monochrom-LCD 33 hindurch, wodurch ein für einen nicht dargestellten Betrachter sichtbares Bild erzeugt wird. Die Ansteuerung der einzelnen Lichtquellen 29, 30, 31 und die jeweils darauf abgestimmte Einstellung des steuerbaren Monochrom-LCD 33 erfolgt in kurzem zeitlichen Abstand nacheinander, so dass für den Betrachter unsichtbar eine aufeinander folgende Überlagerung zu einer einheitlichen Abbildung der einzelnen Farbkanäle erreicht wird.

## Patentansprüche

1. Zur Verwendung bei einem Kraftfahrzeug bestimmte Anzeigeeinheit, welche zur Darstellung eines farbigen, mittels einer Flüssigkristallanzeige (LCD) erzeugten, insbesondere an einer Frontscheibe des Kraftfahrzeuges reflektierten, Bildes ausgeführt ist, **dadurch gekennzeichnet**, dass die Anzeigeeinheit (2; 17; 28) mehrere Lichtquellen (9, 10, 11; 18, 19, 20; 29, 30, 31) mit unterschiedlichem Farbspektrum, deren abgestrahltes Licht durch eine den Lichtquellen (9, 10, 11; 18, 19, 20; 29, 30, 31) zugeordnete und als monochromatisches LCD (12, 13, 14; 21, 22, 23; 33) ausgeführte Flüssigkristallanzeige fällt, und ein optisches Element (8; 24; 32) zum Richten des Lichtes auf eine Projektions- oder Umlenkfläche (4) aufweist.

2. Anzeigeeinheit nach Anspruch 1, **dadurch gekennzeichnet**, dass die Lichtquellen (9, 10, 11; 18, 19, 20) einfarbiges Licht abstrahlen und den Lichtquellen (9, 10, 11; 18, 19, 20) jeweils ein monochromatisches LCD (12, 13, 14; 21, 22, 23) zugeordnet ist.

3. Anzeigeeinheit nach Anspruch 1 oder 2, **dadurch gekennzeichnet**, dass das monochromatische LCD (33) steuerbar ist und dass der Steuerung des LCDs (33) entsprechend sequentiell das Licht der einzelnen Lichtquellen (29, 30, 31) hindurchfällt.

4. Anzeigeeinheit nach einem der vorhergehenden Ansprüche, **dadurch gekennzeichnet**, dass die Anzeigeeinheit (2; 17; 28) jeweils eine rote, eine grüne und eine blaue Lichtquelle (9, 10, 11; 18, 19, 20; 29, 30, 31) aufweist.

5. Anzeigeeinheit nach einem der vorhergehenden Ansprüche, **dadurch gekennzeichnet**, dass die Lichtquellen (9, 10, 11; 18, 19, 20; 29, 30, 31) Leuchtdioden (LED) sind.

6. Anzeigeeinheit nach einem der vorhergehenden Ansprüche, **dadurch gekennzeichnet**, dass die Lichtquellen (9, 10, 11; 18, 19, 20; 29, 30, 31) farbige Leuchtstofflampen sind.

7. Anzeigeeinheit nach einem der vorhergehenden Ansprüche, **dadurch gekennzeichnet**, dass das optische Element (8; 24) jeweils eine einer Lichtquelle (9, 10; 18, 19) zugeordnete, farbselektive Spiegelfläche (15, 16; 25, 26) hat, mittels derer die Strahlengänge der einzelnen Lichtquellen (9, 10; 18, 19) zu der gemeinsamen Projektions- oder Umlenkfläche (4) zusammenführbar sind.

8. Anzeigeeinheit nach einem der vorhergehenden Ansprüche, **dadurch gekennzeichnet**, dass das optische Element (24) ein verschiedene farbselektive Spiegelflächen (25, 26) aufweisender Dichroit-Körper ist.
